# EUROPÄISCHE PATENTSCHRIFT

(11) **EP 1 517 812 B1**
(45) Veröffentlichungstag und Bekanntmachung des Hinweises auf die Patenterteilung: **20.09.2006**
(21) Anmeldenummer: 03740272.4
(22) Anmeldetag: 18.06.2003
(51) Int. Cl.: B60R 13/08, B60N 3/04, B32B 27/12, B32B 7/10, B32B 3/24

(54) **SCHALLISOLIERENDER BODENBELAG UND VERFAHREN ZU DESSEN HERSTELLUNG**
SOUNDPROOFING FLOOR COVERING AND METHOD FOR THE PRODUCTION THEREOF
REVETEMENT DE SOL INSONORISANT ET SON PROCEDE DE PRODUCTION

(30) Priorität: 01.07.2002 DE 10229524
(43) Veröffentlichungstag der Anmeldung: 30.03.2005
(73) Patentinhaber: Carcoustics Tech Center GmbH, 51381 Leverkusen (DE)
(72) Erfinder: CZERNY, Hans, Rudolf, 53913 Swisttal (DE)
(74) Vertreter: Meyer, Hans-Joachim
(86) Internationale Anmeldenummer: PCT/EP2003/006423
(87) Internationale Veröffentlichungsnummer: WO 2004/002780

(56) Entgegenhaltungen:
- EP-A- 0 361 799
- DE-A- 3 905 607
- DE-A- 10 044 761
- DE-A- 19 960 945
- DE-U- 8 204 934
- FR-A- 2 300 748

## Beschreibung

Die Erfindung betrifft einen schallisolierenden Bodenbelag, insbesondere für Kraftfahrzeuge, mit einer rückseitig einen Grundträger aufweisenden Teppichschicht und einer Unterschicht, die mit der Rückseite der Teppichschicht durch mehrstufig aufgebrachten Schmelzklebstoff verklebt ist, sowie ein Verfahren zur Herstellung eines solchen Bodenbelages. Ein sollcher Bodenbelag ist aus dem Dokument EP-A-0 361 799 bekannt.

Die Schallisolation an Kraftfahrzeugen hat für die Verbesserung von Fahrkomfort und Fahrsicherheit einen hohen Stellenwert, denn eine spürbare Reduzierung des Innengeräuschpegels im Fahrzeuginnenraum bedeutet eine Verringerung der Beeinträchtigung der Konzentrations- und Leistungsfähigkeit der Fahrzeuginsassen. Die Wahrnehmung des Verkehrsgeschehens durch den Fahrer sowie die Sprachverständlichkeit im Fahrzeuginnenraum werden verbessert.

Eine Vielzahl schallisolierender Bodenbeläge ist bereits für Personenkraftfahrzeuge entwickelt worden.

Viele dieser Bodenbeläge besitzen ein zu geringes Schallabsorptionsvermögen. Andererseits existieren auch Bodenbeläge mit zufriedenstellendem Schallabsorptionsvermögen, jedoch weisen diese Bodenbeläge dann in der Regel ein relativ hohes Flächengewicht auf, was hinsichtlich der Bestrebung, den Kraftstoffverbrauch durch Verringerung des Fahrzeuggewichtes zu reduzieren, nachteilig ist. Ferner werden bei einigen bekannten Teppichbelägen Dispersionsklebstoffe oder Acrylate zur Verfestigung der Polkette verwendet. Diese Klebstoffe wirken jedoch nicht ausreichend versteifend. Thermoplastische Klebstoffe können dagegen zwar eine höhere Versteifung bewirken, sie haben jedoch relativ hohe Schrumpfwerte, was zu einer unbefriedigenden Planlage eines damit hergestellten Teppichbelages führt.

Die DE 39 05 607 A1 beschreibt einen schallisolierenden Bodenbelag für Kraftfahrzeuge mit einer Teppichschicht und einer akustisch wirksamen Schicht, die aus einem thermoverformbaren, absorbierenden, zu Schaum verarbeitbaren Kunststoff sowie einer Schicht aus einem Vlies besteht. Die Teppichschicht dieses Bodenbelages besteht aus einer Trägerschicht, in die durch Tuften der Flor bzw. das Filament eingebracht ist. Zur Einbindung des Filaments ist ein Anstrich aus Hot-Melt oder Latex aufgetragen. Zum Verkleben der darauf folgenden akustisch wirksamen Schicht ist Polyethylenpulver auf die Filamenteinbindung aufgesintert. Auf die akustisch wirksame Schicht folgt eine aufgeschäumte Rückenbeschichtung. Alternativ kann zwischen der akustisch wirksamen Schicht und der aufgeschäumten Rückbeschichtung noch ein aufkaschiertes Abdichtvlies oder eine Schwerschicht angeordnet sein. Die Herstellung dieses bekannten Bodenbelages ist relativ aufwendig.

Der vorliegenden Erfindung liegt die Aufgabe zugrunde, einen schallisolierenden Bodenbelag der eingangs genannten Art zu schaffen, der ein geringes Gewicht aufweist, eine hohe schallisolierende Wirkung hat, eine ausreichende Steifigkeit besitzt, geringe Schrumpfwerte aufweist und kostengünstig herstellbar ist. Außerdem soll ein Verfahren zur Herstellung eines solchen Bodenbelages angegeben werden.

Gelöst wird diese Aufgabe durch einen Bodenbelag mit den Merkmalen des Anspruchs 1 bzw. durch ein Verfahren mit den Merkmalen des Anspruchs 10. Bevorzugte und vorteilhafte Ausgestaltungen der Erfindung sind in den Unteransprüchen angegeben.

Der erfindungsgemäße Bodenbelag besteht im wesentlichen aus einer einen Grundträger aufweisenden Teppichschicht und einer Unterschicht, die mit der Rückseite der Teppichschicht durch mehrstufig aufgebrachten Schmelzklebstoff verklebt ist, wobei unmittelbar auf den Grundträger der Teppichschicht ein Schmelzklebstoff aufgebracht ist, der eine durchschnittliche Schmelze-Massenfließrate im Bereich von 190 bis 210 g/10 min, vorzugsweise von etwa 200 g/10 min und einen niedrigeren Schmelzpunkt besitzt als ein Schmelzklebstoff, der in einer nachfolgenden Stufe aufgebracht ist und eine durchschnittliche Schmelze-Massenfließrate im Bereich von 140 bis 160 g/10 min, vorzugsweise von etwa 150 g/10 min besitzt.

Der erfindungsgemäße Bodenbelag zeichnet sich durch eine gute Verbindung zwischen dem Fasermaterial der Teppichschicht und der akustisch wirksamen, vorzugsweise aus leichtem Absorbermaterial gebildeten Unterlage aus. Es wird ein Teppichbelag mit einer besonders leichten Rückenbeschichtung erzielt, die keine Verwerfungen oder Schrumpfungen aufweist, so dass der Teppich eine gute Planlage besitzt. Ferner besitzt der erfindungsgemäße Bodenbelag eine gute Steifigkeit bzw. Formstabilität.

Als Schmelzklebstoff wird vorzugsweise pulverförmiger Schmelzkleber verwendet, beispielsweise ein EVA- oder LD-PE-Schmelzkleber. Durch die vergleichsweise hohe Schmelze-Massenfließrate und den vergleichsweise niedrigen Schmelzpunkt des zuerst aufgetragenen Schmelzklebstoffs wird eine hervorragend verschleißfeste Polfaseranbindung an den Grundträger der Teppichschicht erreicht.

Eine vorteilhafte Ausgestaltung des erfindungsgemäßen Bodenbelages besteht darin, dass der Grundträger der Teppichschicht ein Gewebe, Gewirke oder Vlies ist, wobei der unmittelbar auf den Grundträger aufgebrachte Schmelzklebstoff und der in der nachfolgenden Stufe aufgebrachte Schmelzklebstoff eine Klebstoffschicht bilden, die eine Vielzahl von Fluiddurchlässe definierenden Lücken aufweist. Hierdurch wird das Schallabsorptionsvermögen des erfindungsgemäßen Bodenbelages verbessert. Über die durchlässige Teppichschicht und die in der Klebstoffschicht vorhandenen Lücken können Schallwellen bis in die schallisolierende Unterschicht vordringen.

Die schallisolierende Unterschicht des erfindungsgemäßen Bodenbelages besteht vorzugsweise aus einer Vliesschicht, insbesondere aus einem PET/PP/PET-Mischvlies, und/oder einer Schwerschicht, insbesondere einer geschäumten Schwerschicht.

Eine andere vorteilhafte Ausgestaltung des erfindungsgemäßen Bodenbelages besteht darin, dass vorzugsweise in dem zweiten Schmelzklebstoff mineralische Mikrokörper und/oder mineralische Mikrohohlkörper, beispielsweise Glashohlkügelchen oder Keramikhohlkügelchen enthalten sind. Solche Hohlkörper haben ein geringes Gewicht und erhöhen die Festigkeit bzw. Steifigkeit des Bodenbelages. Mineralische Mikrohohlkörper sind dabei zu bevorzugen, da sie besonders leicht sind und wärme- und schallisolierend wirken.

Die Formstabilität bzw. Steifigkeit des erfindungsgemäßen Bodenbelages kann ferner durch vernetzende Zusätze erhöht werden, die vorzugsweise dem in der nachfolgenden Stufe aufgebrachten Schmelzklebstoff beigegeben werden. Bei diesen Zusätzen kann es sich vorzugsweise um Melaminharzpulver handeln. Melaminharz zeichnet sich durch eine gute Temperaturbeständigkeit aus und besitzt zudem eine gewisse Flammschutzwirkung.

Eine weitere vorteilhafte Ausgestaltung des erfindungsgemäßen Bodenbelages besteht darin, dass in dem in der nachfolgenden Stufe aufgebrachten Schmelzklebstoff ein Flammschutzmittel enthalten ist. Als Flammschutzmittel wird vorzugsweise Aluminiumhydroxid-Pulver und/oder Magnesiumhydroxid-Pulver verwendet.

Weitere bevorzugte und vorteilhafte Ausgestaltungen der Erfindung sind in den Unteransprüchen angegeben.

Nachfolgend wird die Erfindung anhand einer ein Ausführungsbeispiel darstellenden Zeichnung näher erläutert. Es zeigen in schematischer Darstellung:
- Fig. 1: einen nicht maßstabsgetreuen Querschnitt durch einen erfindungsgemäßen Bodenbelag, und
- Fig. 2: den grundsätzlichen Aufbau einer Anlage zur Herstellung des erfindungsgemäßen Bodenbelages.

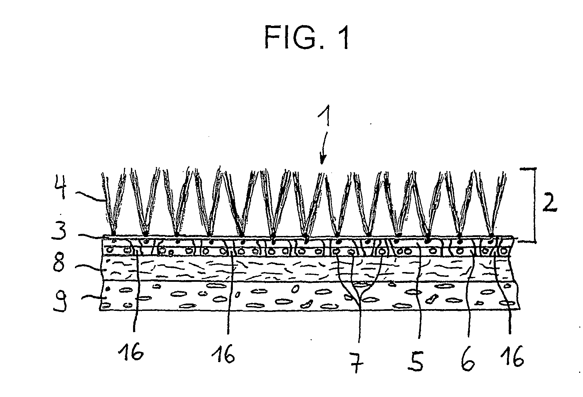

Die Sichtfläche 1 des in Fig. 1 dargestellten Bodenbelages besteht aus einer Teppichschicht 2 mit einem Grundträger 3, in den die Polkette 4 mit Hilfe einer Vielnadelmaschine eingezogen sind. Die Polkette 4 wird später aufgeschnitten, so dass ein Velours-Teppich entsteht. Der Grundträger 3 der Teppichschicht 2 ist für Schallwellen durchlässig. Er kann beispielsweise aus einem Traggewebe, Traggewirk oder Tragvlies bestehen. Vorzugsweise besteht der Grundträger 3 aus einem Spinnvlies.

Unmittelbar auf die textile Rückseite der Teppichschicht 2 ist ein Schmelzklebstoff 5 aufgetragen, bei dem es sich vorzugsweise um Schmelzklebstoff auf Basis von Ethylen-Vinylacetat (EVA) oder Low-Density-Polyethylen (PE-LD) handelt. Der Schmelzklebstoff 5 wird mit einer Menge von etwa 50 g/m² aufgetragen.

Auf diese erste Klebstoffbeschichtung 5 wird ein zweiter Schmelzklebstoff 6 aufgetragen. Auch bei diesem Schmelzklebstoff kann es sich um einen EVA- oder PE-LD-Klebstoff handeln. Er wird mit einer Menge von etwa 150 g/m² aufgetragen.

Der zuerst aufgetragene Schmelzklebstoff 5 besitzt eine durchschnittliche Schmelze-Massenfließrate von 190 bis 210 g/10 min, vorzugsweise von etwa 200 g/10 min, und hat einen niedrigeren Schmelzpunkt als der Schmelzklebstoff 6, der nachfolgend aufgebracht ist und eine durchschnittliche Schmelze-Massenfließrate von 140 bis 160 g/10 min, vorzugsweise von etwa 150 g/10 min besitzt. Die Schmelze-Massenfließrate (MFR) wird mitunter auch als Schmelzindex (MFI) bezeichnet. Sie beschreibt das Fließverhalten einer Schmelze und ist in der ISO 1133 sowie der ASTM D 1238 definiert. Es versteht sich, dass die für die beiden Schmelzklebstoffe 5 und 6 angegebenen Werte der Schmelze-Massenfließrate unter gleichen Bedingungen, d.h. bei gleichem Druck und gleicher Temperatur, ermittelt wurden, und zwar bei Normaldruck 101325 Pa (= 1,01325 bar) und 190°C.

Es ist zu erkennen, dass der Schmelzklebstoff 5 und der nachfolgend aufgebrachte Schmelzklebstoff 6 eine Klebstoffschicht bilden, die eine Vielzahl von Fluiddurchlässe definierenden Lücken bzw. Ausnehmungen 16 aufweist. Der Schmelzklebstoff 5 und 6 ist somit vorwiegend an den Polfasern bzw. Polnoppen der Teppichschicht angelagert und bildet eine Art Netz. In dem zuletzt aufgetragenen Schmelzklebstoff 6 sind mineralische Mikrohohlkörper 7, z.B. in Form von Glashohlkügelchen oder Keramikhohlkügelchen enthalten. Die Glashohlkügelchen bzw. keramischen Mikrohohlkugeln versteifen den Bodenbelag und haben zudem eine bemerkenswerte schallisolierende Wirkung.

Nach einer bevorzugten Variante kann der Schmelzklebstoff 6 zudem einen duroplastisch vernetzenden Zusatz und/oder ein Flammschutzmittel enthalten. Bei dem duroplastisch vernetzenden Zusatz handelt es sich vorzugsweise um Melaminharzpulver. Als flammhemmender Zusatz kommt vorzugsweise Aluminiumhydroxid-Pulver mit einer Korngröße von ≤ 150 µm und/oder ein entsprechend feines Magnesiumhydroxid-Pulver zum Einsatz.

Alternativ oder zusätzlich kann der Schmelzklebstoff 6 neben den mineralischen Mikrohohlkörper 7 noch unter Hitze- bzw. Feuereinwirkung expandierende Teilchen enthalten. Die Teilchen bestehen aus kleinen Kunststoffhohlpartikeln, die eine gasdichte, in Wasser unlösliche Hülle aus einem Mischpolymer aufweisen, in der flüssiger und/oder gasförmiger Kohlenwasserstoff eingekapselt ist. Die Kunststoffhohlpartikel weisen einen Korndurchmesser im Bereich von etwa 2 bis 50 µm, vorzugsweise im Bereich von etwa 10 bis 20 µm. Wenn die Kunststoffhohlpartikel durch Wärme- bzw. Feuereinwirkung erhitzt werden, geht der flüssige Kohlenwasserstoff in die Gasphase über. Der Druck des gasförmigen Kohlenwasserstoffs nimmt mit wachsender Temperatur zu. Gleichzeitig erweicht die gasdichte Hülle, so dass das Volumen der Kunststoffhohlpartikel um ein Vielfaches zunimmt. Die Volumenzunahme kann beispielsweise das 30- bis 50-fache des ursprünglichen Volumens betragen. Das Material der gasdichten Hülle und der darin eingeschlossene Kohlenwasserstoff sind so gewählt, dass die Volumenzunahme (Expansion) bei Wärmeeinwirkung ab einem bestimmten Temperaturbereich ausgelöst wird. Die Auslösetemperatur liegt vorzugsweise bei einer Temperatur von über 100°C. In einem bestimmten Temperaturbereich ist die Hülle so weich, dass sie bei weiterer Temperaturerhöhung schließlich platzt und den eingekapselten Kohlenwasserstoff als Treibgas freigibt. Der Temperaturbereich, in welchem das Treibgas freigesetzt wird, liegt oberhalb von etwa 130°C.

Auf die Klebstoffbeschichtung folgt eine akustisch wirksame Unterschicht in Form einer Vliesschicht 8. Schließlich folgt auf die Vliesschicht 8 eine geschäumte Schwerschicht 9. Die Vliesschicht 8 besteht vorzugsweise aus PET/PP/PET-Mischvlies oder Spinnvlies. Es liegt auch im Rahmen der Erfindung die Schwerschicht 9 oder die Vliesschicht 8 fortzulassen.

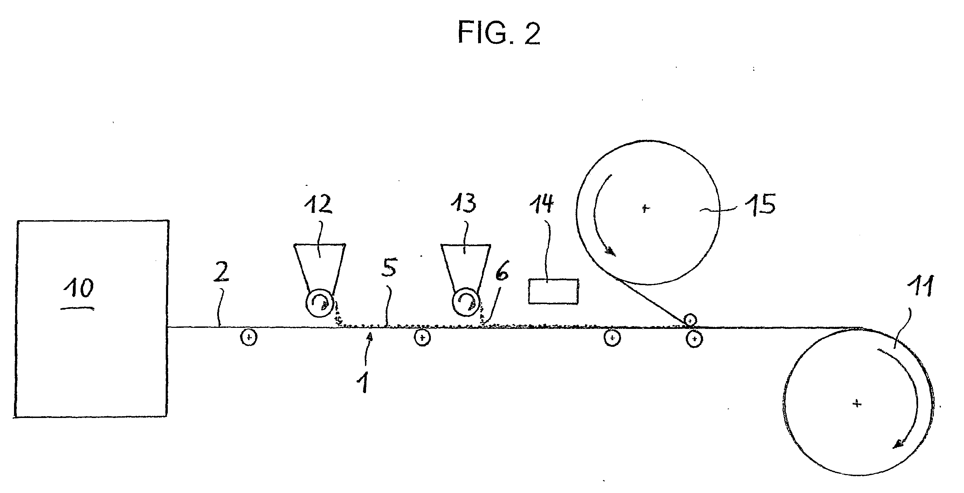

In Fig. 2 ist die Herstellung des erfindungsgemäßen Bodenbelages veranschaulicht. Mit 10 ist eine Produktionsanlage bezeichnet, in der die Teppichschicht 2 mit einem Grundträger aus Gewebe, Gewirke oder Vlies als Bahnware erzeugt wird. Von der Produktionsanlage 10 wird die Teppichschicht bzw. Teppichbahn 2 über Stützrollen zu einer Aufwickelvorrichtung 11 transportiert, wobei die Sichtseite 1 des Teppichs nach unten und der Grundträger nach oben weist.

Oberhalb der Teppichbahn 2 sind zwei in Transportrichtung zueinander beabstandete Pulverstreuköpfe 12, 13 angeordnet, die dem Aufbringen von Schmelzkleberpulver dienen. Der Pulverstreukopf 12 ist in bezug auf die Transportgeschwindigkeit der Teppichbahn 2 so eingestellt, dass er Schmelzkleberpulver in einer Menge von etwa 50 g/m² unmittelbar auf den Grundträger der Teppichschicht 2 aufbringt. Der in Transportrichtung nachfolgende Pulverstreukopf 13 ist dagegen so eingestellt, dass er Schmelzkleberpulver 6 in einer Menge von etwa 150 g/m² auf die erste Schmelzkleberschicht 5 aufbringt. Das Schmelzkleberpulver 6 enthält die oben genannten Mikrohohlkörper 7 und bei Bedarf einen oder mehrere der genannten Zusätze.

Hinter dem Pulverstreukopf 13 folgt in Transportrichtung des Teppichbahn 2 gesehen eine Heizvorrichtung 14, beispielsweise in Form eines Infrarotstrahlers, mit der beide Schmelzkleberpulver 5 und 6 gemeinsam aufgeschmolzen werden. Anschließend wird mindestens eine Vliesstoff- und/oder Schwerschichtbahn, die von einer Vorratsrolle 15 abgewickelt wird, auf die den geschmolzenen Klebstoff aufweisende Rückseite der Teppichbahn 2 aufkaschiert. Zur schnelleren Verfestigung des Klebstoffes kann darüber hinaus eine Kühlvorrichtung (nicht gezeigt) vorgesehen sein.

Der Schmelzklebstoff 5 und der in der nachfolgenden Stufe aufgebrachte Schmelzklebstoff 6 werden so eingestellt und aufgebracht, dass nach ihrem Aufschmelzen und ihrer Verfestigung eine netzartige Klebstoffschicht entsteht, die eine Vielzahl von einen Fluiddurchlaß gestattenden Lücken oder Ausnehmungen aufweist.

Die Erfindung ist in ihrer Ausführung nicht auf das vorstehend beschriebene Ausführungsbeispiel beschränkt. Vielmehr sind eine Reihe von Varianten möglich, die auch bei grundsätzlich abweichender Gestaltung von dem in den Ansprüchen definierten Erfindungsgedanken Gebrauch machen. So kann beispielsweise der zuerst aufgebrachte Pulverklebstoff 5 schon vor dem Aufbringen des zweiten Pulverklebstoffs 6 mit einer dem Pulverstreukopf 13 vorgeschalteten zusätzlichen Heizvorrichtung (nicht gezeigt) aufgeschmolzen werden.

## Patentansprüche

1. Schallisolierender Bodenbelag, insbesondere für Kraftfahrzeuge, mit einer rückseitig einen Grundträger (3) aufweisenden Teppichschicht (2) und einer Unterschicht (8, 9), die mit der Rückseite der Teppichschicht durch mehrstufig aufgebrachten Schmelzklebstoff (5, 6) verklebt ist,
**dadurch gekennzeichnet, dass**
unmittelbar auf den Grundträger der Teppichschicht (2) ein Schmelzklebstoff (5) aufgebracht ist, der eine durchschnittliche Schmelze-Massenfließrate im Bereich von 190 bis 210 g/10 min und einen niedrigeren Schmelzpunkt besitzt als ein Schmelzklebstoff (6), der in einer nachfolgenden Stufe aufgebracht ist und eine durchschnittliche Schmelze-Massenfließrate im Bereich von 140 bis 160 g/10 min besitzt.

2. Bodenbelag nach Anspruch 1,
**dadurch gekennzeichnet, dass**
der unmittelbar auf den Grundträger (3) der Teppichschicht (2) aufgebrachte Schmelzklebstoff (5) mit geringerer Masse pro Flächeneinheit aufgebracht ist als der in der nachfolgenden Stufe aufgebrachte Schmelzklebstoff (6).

3. Bodenbelag nach Anspruch 1 oder 2,
**dadurch gekennzeichnet, dass**
in mindestens einem der Schmelzklebstoffe (5, 6) mineralische Mikrokörper und/oder mineralische Mikrohohlkörper (7) enthalten sind.

4. Bodenbelag nach Anspruch 1 oder 2,
**dadurch gekennzeichnet, dass**
in dem in der nachfolgenden Stufe aufgebrachten Schmelzklebstoff (6) mineralische Mikrokörper und/oder mineralische Mikrohohlkörper (7) enthalten sind.

5. Bodenbelag nach einem der Ansprüche 1 bis 4,
**dadurch gekennzeichnet, dass**
der Grundträger (3) ein Gewebe, Gewirke oder Vlies ist, wobei der unmittelbar auf den Grundträger (3) aufgebrachte Schmelzklebstoff (5) und der in der nachfolgenden Stufe aufgebrachte Schmelzklebstoff (6) eine Klebstoffschicht bilden, die eine Vielzahl von Fluiddurchlässe definierenden Lücken (16) aufweist.

6. Bodenbelag nach einem der Ansprüche 1 bis 5,
**dadurch gekennzeichnet, dass**
die Unterschicht aus einer Vliesschicht (8) und/oder einer Schwerschicht (9) besteht.

7. Bodenbelag nach einem der Ansprüche 1 bis 6,
**dadurch gekennzeichnet, dass**
in dem in der nachfolgenden Stufe aufgebrachten Schmelzklebstoff (6) ein oder mehrere vernetzende Zusätze enthalten sind.

8. Bodenbelag nach einem der Ansprüche 1 bis 7,
**dadurch gekennzeichnet, dass**
in dem in der nachfolgenden Stufe aufgebrachten Schmelzklebstoff (6) ein Flammschutzmittel enthalten ist.

9. Bodenbelag nach einem der Ansprüche 1 bis 8,
**dadurch gekennzeichnet, dass**
in dem in der nachfolgenden Stufe aufgebrachten Schmelzklebstoff (6) bei Wärmeeinwirkung expandierende Teilchen enthalten sind.

10. Verfahren zur Herstellung eines Bodenbelages gemäß einem der Ansprüche 1 bis 9, bei dem auf die Rückseite einer Teppichschicht (2), die rückseitig eine textile Grundschicht (3) aufweist, in mehreren Stufen Schmelzklebstoff (5, 6) und auf den Schmelzklebstoff eine schallabsorbierende Unterschicht (8, 9) aufgebracht werden,
**dadurch gekennzeichnet, dass**
unmittelbar auf die Grundschicht (3) der Teppichschicht (2) ein Schmelzklebstoff (5) aufgebracht wird, der eine durchschnittliche Schmelze-Massenfließrate im Bereich von 190 bis 210 g/10 min und einen niedrigeren Schmelzpunkt besitzt als ein in einer nachfolgenden Stufe aufgebrachter Schmelzklebstoff (6), der eine durchschnittliche Schmelze-Massenfließrate im Bereich von 140 bis 160 g/10 min besitzt.

11. Verfahren nach Anspruch 10,
**dadurch gekennzeichnet, dass**
der Schmelzklebstoff (5) in der ersten Stufe mit geringerer Masse pro Flächeneinheit aufgetragen wird als der Schmelzklebstoff (6), der in der nachfolgenden Stufe aufgebracht wird.

12. Verfahren nach Anspruch 10 oder 11,
**dadurch gekennzeichnet, dass**
der unmittelbar auf die Grundschicht (3) der Teppichschicht (2) aufgebrachte Schmelzklebstoff (5) und der in der nachfolgenden Stufe aufgebrachte Schmelzklebstoff (6) jeweils in Form von pulverförmigem Schmelzklebstoff aufgestreut und vor dem Aufbringen der schallabsorbierenden Unterschicht gemeinsam oder zeitlich voneinander getrennt aufgeschmolzen werden.

13. Verfahren nach einem der Ansprüche 10 bis 12,
**dadurch gekennzeichnet, dass**
dem in der nachfolgenden Stufe aufgebrachten Schmelzklebstoff (6) mineralische Mikrokörper und/oder mineralische Mikrohohlkörper (7) zugegeben werden.

14. Verfahren nach einem der Ansprüche 10 bis 13,
**dadurch gekennzeichnet, dass**
als Grundträger (3) ein Gewebe, Gewirke oder Vlies verwendet wird und der unmittelbar auf den Grundträger (3) der Teppichschicht (2) aufgebrachte Schmelzklebstoff (5) und der in der nachfolgenden Stufe aufgebrachte Schmelzklebstoff (6) derart aufgebracht werden, dass nach Verfestigung der Schmelzklebstoffe (5, 6) eine Klebstoffschicht entsteht, die eine Vielzahl von einen Fluiddurchlaß gestattenden Lücken aufweist.

15. Verfahren nach einem der Ansprüche 10 bis 14,
**dadurch gekennzeichnet, dass**
als schallabsorbierende Unterschicht eine Vliesschicht (8) und/oder eine Schwerschicht (9) aufgebracht werden.

16. Verfahren nach einem der Ansprüche 10 bis 15,
**dadurch gekennzeichnet, dass**
dem in der nachfolgenden Stufe aufgebrachten Schmelzklebstoff (6) ein vernetzender Zusatz zugegeben wird.

17. Verfahren nach einem der Ansprüche 10 bis 16,
**dadurch gekennzeichnet, dass**
dem in der nachfolgenden Stufe aufgebrachten Schmelzklebstoff (6) ein Flammschutzmittel zugegeben wird.

18. Verfahren nach einem der Ansprüche 10 bis 17,
**dadurch gekennzeichnet, dass**
dem in der nachfolgenden Stufe aufgebrachten Schmelzklebstoff (6) unter Wärmeeinwirkung expandierende Teilchen zugegeben werden.

## Claims

1. A sound-insulating floor covering, in particular for motor vehicles, comprising a carpet layer (2) which on the underside comprises a base substrate (3), and a sub-layer (8, 9) which is bonded to the underside of the carpet layer by means of a hot-melt adhesive (5, 6) applied in multiple stages,
**characterized in that**
directly to the base substrate of the carpet layer (2) a hot-melt adhesive (5) is applied which has an average mass flow rate of the melt ranging from 190 to 210 g/10 min and has a lower melting point than a hot-melt adhesive (6) which is applied in a subsequent stage and which has an average mass flow rate of the melt ranging from 140 to 160 g/10 min.

2. The floor covering according to claim 1,
**characterized in that**
the hot-melt adhesive (5) which is applied directly to the base substrate (3) of the carpet layer (2) is applied at a lower mass per unit area than the hot-melt adhesive (6) which is applied in the subsequent stage.

3. The floor covering according to claim 1 or 2,
**characterized in that**
at least one of the hot-melt adhesives (5, 6) comprises mineral microbodies and/or hollow mineral microbodies (7).

4. The floor covering according to claim 1 or 2,
**characterized in that**
the hot-melt adhesive (6) which is applied in the subsequent stage comprises mineral microbodies and/or hollow mineral microbodies (7).

5. The floor covering according to any one of claims 1 to 4,
**characterized in that**
the base substrate (3) is a woven fabric, knitted fabric or nonwoven fabric, wherein the hot-melt adhesive (5) which is applied directly to the base substrate (3), and the hot-melt adhesive (6) which is applied in the subsequent stage form an adhesive layer which comprises a multitude of gaps (16) which define fluid-permeable passages.

6. The floor covering according to any one of claims 1 to 5,
**characterized in that**
the sub-layer comprises a layer of nonwoven fibre fabric (8) and/or a heavy layer (9).

7. The floor covering according to any one of claims 1 to 6,
**characterized in that**
the hot-melt adhesive (6) which is applied in the subsequent stage comprises one or several crosslinking additives.

8. The floor covering according to any one of claims 1 to 7,
**characterized in that**
the hot-melt adhesive (6) which is applied in the subsequent stage comprises a flame retardant.

9. The floor covering according to any one of claims 1 to 8,
**characterized in that**
the hot-melt adhesive (6) which is applied in the subsequent stage comprises particles which expand under the effect of heat.

10. A method for producing a floor covering according to any one of claims 1 to 9, in which in several stages hot-melt adhesive (5, 6) is applied to the backing of a carpet layer (2) which on the underside comprises a textile base layer (3), and a sound-insulating sub-layer (8, 9) is applied to the hot-melt adhesive,
**characterized in that**
a hot-melt adhesive (5) is applied directly to the base layer (3) of the carpet layer (2), which hot-melt adhesive (5) has an average mass flow rate of the melt ranging from 190 to 210 g/10 min, and a lower melting point than a hot-melt adhesive (6) which is applied in a subsequent stage and which has an average mass flow rate of the melt ranging from 140 to 160 g/10 min.

11. The method according to claim 10,
**characterized in that**
the hot-melt adhesive (5) which is applied in the first stage is applied at a lower mass per unit area than the hot-melt adhesive (6) which is applied in the subsequent stage.

12. The method according to claim 10 or 11,
**characterized in that**
the hot-melt adhesive (5) which is applied directly to the base layer (3) of the carpet layer (2) and the hot-melt adhesive (6) which is applied in the subsequent stage are each scattered-on in the form of powdered hot-melt adhesive, and are melted-on prior to the application of the sound-absorbent sub-layer, either together or spaced apart in time.

13. The method according to any one of claims 10 to 12,
**characterized in that**
mineral microbodies and/or hollow mineral microbodies (7) are added to the hot-melt adhesive (6) which is applied in the subsequent stage.

14. The method according to any one of claims 10 to 13,
**characterized in that**
a woven fabric, knitted fabric or nonwoven fabric is used as the base substrate (3), and the hot-melt adhesive (5) which is applied directly to the base substrate (3) of the carpet layer (2) and the hot-melt adhesive (6) which is applied in the subsequent stage are applied such that after solidification of the hot-melt adhesives (5, 6) an adhesive layer is formed which comprises a multitude of gaps which define fluid-permeable passages.

15. The method according to any one of claims 10 to 14,
**characterized in that**
a layer of nonwoven fibre fabric (8) and/or a heavy layer (9) are/is applied as a sound-absorbent sub-layer.

16. The method according to any one of claims 10 to 15,
**characterized in that**
a crosslinking additive is added to the hot-melt adhesive (6) which is applied in the subsequent stage.

17. The method according to any one of claims 10 to 16,
**characterized in that**
a flame retardant is added to the hot-melt adhesive (6) which is applied in the subsequent stage.

18. The method according to any one of claims 10 to 17,
**characterized in that**
particles which expand under the effect of heat are added to the hot-melt adhesive (6) which is applied in the subsequent stage.

## Revendications

1. Revêtement de plancher insonorisant, destiné en particulier à des véhicules automobiles, comportant une couche de moquette (2) présentant un support de fond (3) sur sa face verso, et comportant une couche inférieure (8, 9) qui est collée à la face verso de la couche de moquette par une colle thermofusible (5, 6) appliquée en plusieurs étapes, **caractérisé en ce qu'**une colle thermofusible (5) est appliquée directement sur le support de fond de la couche de moquette (2), laquelle colle présente un indice de fluidité moyen de l'ordre de 190 à 210 g/10 min et un point de fusion inférieur à celui de la colle thermofusible (6) qui est appliquée dans une étape ultérieure et qui présente un indice de fluidité moyen de l'ordre de 140 à 160 g/10 min.

2. Revêtement de plancher selon la revendication 1, **caractérisé en ce que** la colle thermofusible (5) appliquée directement sur le support de fond (3) de la couche de moquette (2) est appliquée en une moindre masse par unité de surface que la colle thermofusible (6) appliquée dans l'étape ultérieure.

3. Revêtement de plancher selon la revendication 1 ou 2, **caractérisé en ce qu'**au moins une des colles thermofusibles (5, 6) contient des microcorps minéraux et/ou des microcorps creux minéraux (7).

4. Revêtement de plancher selon la revendication 1 ou 2, **caractérisé en ce que** la colle thermofusible (6) appliquée dans l'étape ultérieure contient des microcorps minéraux et/ou des microcorps creux minéraux (7).

5. Revêtement de plancher selon une des revendications 1 à 4, **caractérisé en ce que** le support de fond (3) est un tissu, un tricot ou un non-tissé, la colle thermofusible (5) appliquée directement sur le support de fond (3) et la colle thermofusible (6) appliquée dans l'étape ultérieure formant une couche de colle qui présente une pluralité de vides (16) définissant des passages de fluide.

6. Revêtement de plancher selon une des revendications 1 à 5, **caractérisé en ce que** la couche inférieure est constituée d'une couche de non-tissé (8) et/ou d'une couche lourde (9).

7. Revêtement de plancher selon une des revendications 1 à 6, **caractérisé en ce que** la colle thermofusible (6) appliquée dans l'étape ultérieure contient un ou plusieurs additifs réticulants.

8. Revêtement de plancher selon une des revendications 1 à 7, **caractérisé en ce que** la colle thermofusible (6) appliquée dans l'étape ultérieure contient un agent ignifuge.

9. Revêtement de plancher selon une des revendications 1 à 8, **caractérisé en ce que** la colle thermofusible (6) appliquée dans l'étape ultérieure contient des particules expansibles sous l'effet de la chaleur.

10. Procédé de fabrication d'un revêtement de plancher selon une des revendications 1 à 9, qui consiste à appliquer en plusieurs étapes de la colle thermofusible (5, 6) sur la face verso d'une couche de moquette (2) qui présente une couche de fond textile (3), et à appliquer une couche inférieure insonorisante (8, 9) sur la colle thermofusible, **caractérisé en ce qu'**on applique directement sur la couche de fond (3) de la couche de moquette (2) une colle thermofusible (5) qui présente un indice de fluidité moyen de l'ordre de 190 à 210 g/10 min et un point de fusion inférieur à celui d'une colle thermofusible (6) appliquée dans une étape ultérieure qui présente un indice de fluidité moyen de l'ordre de 140 à 160 g/10 min.

11. Procédé selon la revendication 10, **caractérisé en ce que** la colle thermofusible (5) est appliquée dans la première étape en une moindre masse par unité de surface que la colle thermofusible (6) appliquée dans l'étape ultérieure.

12. Procédé selon la revendication 10 ou 11, **caractérisé en ce que** la colle thermofusible (5) appliquée directement sur la couche de fond (3) de la couche de moquette (2) et la colle thermofusible (6) appliquée dans l'étape ultérieure sont chacune épandues sous la forme d'une colle thermofusible pulvérulente, et sont fondues ensemble ou séparément l'une de l'autre dans le temps avant l'application de la couche inférieure insonorisante.

13. Procédé selon une des revendications 10 à 12, **caractérisé en ce que** des microcorps minéraux et/ou des microcorps creux minéraux (7) sont ajoutés à la colle appliquée (6) dans l'étape ultérieure.

14. Procédé selon une des revendications 10 à 13, **caractérisé en ce qu'**on utilise comme support de fond (3) un tissu, un tricot ou un non-tissé, et **en ce que** la colle thermofusible (5) appliquée directement sur le support de fond (3) de la couche de moquette (2) et la colle thermofusible (6) appliquée dans l'étape ultérieure sont appliquées de telle manière qu'après le durcissement des colles thermofusibles (5, 6), il se crée une couche de colle qui présente une pluralité de vides formant un passage de fluide.

15. Procédé selon une des revendications 10 à 14, **caractérisé en ce qu'**on applique en tant que couche inférieure insonorisante une couche de non-tissé (8) et/ou une couche lourde (9).

16. Procédé selon une des revendications 10 à 15, **caractérisé en ce qu'**un additif réticulant est ajouté à la colle thermofusible (6) appliquée dans l'étape ultérieure.

17. Procédé selon une des revendications 10 à 16, **caractérisé en ce que** qu'un agent ignifuge est ajouté à la colle thermofusible (6) appliquée dans l'étape ultérieure.

18. Procédé selon une des revendications 10 à 17, **caractérisé en ce que** des particules expansibles sous l'effet de la chaleur sont ajoutées à la colle thermofusible (6) appliquée à l'étape ultérieure.
